(19) Europäisches Patentamt
European Patent Office
Office européen des brevets

(11) **EP 3 061 068 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(21) Anmeldenummer: **14792739.6**

(22) Anmeldetag: **21.10.2014**

(51) Int Cl.:
**G06T 11/00** (2006.01)   **G06T 7/62** (2017.01)
**G06T 7/00** (2017.01)   **G01N 23/046** (2018.01)

(86) Internationale Anmeldenummer:
**PCT/EP2014/002840**

(87) Internationale Veröffentlichungsnummer:
**WO 2015/058854 (30.04.2015 Gazette 2015/17)**

(54) **VERFAHREN ZUR BESTIMMUNG DES GEFÄHRDUNGSBEREICHS ZWISCHEN EINEM PRÜFOBJEKT UND EINEM RÖNTGENPRÜFSYSTEM**

METHOD FOR DETERMINING THE DANGER ZONE BETWEEN A TEST OBJECT AND AN X-RAY INSPECTION SYSTEM

PROCÉDÉ DE DÉTERMINATION DE LA ZONE DE DANGER ENTRE UN OBJET À CONTRÔLER ET UN SYSTÈME DE CONTRÔLE À RAYONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2013 DE 102013017459**

(43) Veröffentlichungstag der Anmeldung:
**31.08.2016 Patentblatt 2016/35**

(73) Patentinhaber: **YXLON International GmbH**
**22419 Hamburg (DE)**

(72) Erfinder:
• **KOLESNIKOFF, Piotr**
**20253 Hamburg (DE)**
• **KRATZ, Bärbel**
**23566 Lübeck (DE)**

• **HEROLD, Frank**
**22926 Ahrensburg (DE)**

(74) Vertreter: **DTS Patent- und Rechtsanwälte Schnekenbühl und Partner mbB**
**Marstallstrasse 8**
**80539 München (DE)**

(56) Entgegenhaltungen:
**EP-A1- 1 970 010   JP-A- 2012 184 936**

• **DANIELSSON P -E: "3D cone-beam tomography for nondestructive testing", PROCEEDINGS OF IAPR WORKSHOP ON MACHINE VISION APPLICATIONS UNIV. TOKYO TOKYO, JAPAN, 1994, Seiten 1-8, XP55160840,**

EP 3 061 068 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung befasst sich mit einem Verfahren zur Bestimmung des Gefährdungsbereichs zwischen einem Prüfobjekt und einem Röntgenprüfsystem, die gegeneinander um eine im Prüfobjekt verlaufende Rotationsachse rotieren.

Die Computertomographie (CT) stellt eine Bildgebungsmodalität dar, mit welcher basierend auf Röntgenstrahlung das Innere von Objekten zerstörungsfrei dargestellt werden kann. Insbesondere für die zerstörungsfreie Prüftechnik sind CT-Systeme mit möglichst vielen Freiheitsgraden für eine Aufnahme von Interesse. Bei beweglichen Geräteteilen, wie Röntgendetektor, Röntgenröhre sowie Objektteller, ist die Vermeidung einer Kollision aller Gegenstände innerhalb des Kompaktsystems von höchster Priorität. Neben einer fixen Beschränkung des befahrbaren Raumes als Kollisionsschutz, existieren noch weitere Vorgehensweisen. Bisher besteht unter anderem die Möglichkeit, eine visuelle Navigation durch Blickkontakt (beispielsweise durch ein integriertes Bleiglasfenster) zu überwachen, was jedoch deutlich durch den entsprechenden Blickwinkel eingeschränkt wird.

Alternativ, oder zusätzlich, können Drucksensoren verwendet werden. Im Falle eines Kontaktes, wenn also bereits eine Kollision stattgefunden hat, wird das Verfahren des Objektes abgebrochen. Diese Art der Kollisionsvermeidung ist als Möglichkeit zu betrachten, die beim Versagen anderer Maßnahmen als letzte Instanz eingreift. Dadurch können größere Schäden am Objekt, beziehungsweise anderen Gegenständen innerhalb des Kompaktsystems vermieden werden. Kleinere Schäden sind jedoch durch die Kollision nicht auszuschließen.

Die EP 1 970 010 A1 offenbart ein Röntgen CT System und eine Methode zur Abschätzung des Umrisses eines Objekts. Das System umfasst eine Gantryeinheit, bei welcher eine Röntgenröhre und ein Röntgendetektor um das Objekt rotierbar sind.

Ein Artikel von Per-Erik Danielsson: "3D conebeam tomography for nondestructive testing", PROCEEDINGS OF IAPR WORKSHOP ON MACHINE VISION APPLICATIONS UNIV. TOKYO, JAPAN, 1994, Seiten 1-8, offenbart ein Röntgensystem zur zerstörungsfreien Prüfung, in welchem sich das Prüfobjekt auf einem Drehtisch zwischen einer nicht rotierenden Quelle-Detektor-Anordnung befindet. Der Artikel erwähnt, dass der Quelle-Detektor Abstand größer als der maximale Objektdurchmesser sein sollte, um Kollisionen zu vermeiden.

Die Offenlegungsschrift JP 2012-184936 A offenbart eine Kollisionsüberwachung mittels Videokamera, wobei mehrere Videoaufnahmen dazu dienen, die Objektform durch ein Modell darzustellen. Die Rotation des Drehtisches wird gestoppt, sobald die Quelle-Detektor-Anordnung in einen Gefährdungsbereich um das Objekt kommt.

Der vorliegenden Erfindung liegt deshalb die Aufgabe zugrunde, eine vollautomatische und präzise Volumenerkennung bzw. Oberflächenerkennung beliebiger Prüfobjekte durchzuführen, die in weiteren Schritten der Objektpositionierung zur Vermeidung von Kollisionen verwendet werden kann.

Gelöst wird diese Aufgabe durch ein Verfahren mit den Merkmalen des Patentanspruchs 1. Durch die erfindungsgemäßen Verfahren kann eine Objekterkennung von beliebigen Prüfobjekten durchgeführt werden. Auf deren Basis wird eine Aussage über die genaue Größe des Prüfobjekts getroffen. Die Daten hierfür werden in der Tabelle mit den relevanten Parametern abgelegt. Zu den relevanten Parametern zählt die Beziehung des jeweiligen Radius des Prüfobjekts an einem bestimmten Rotationswinkel. Diese Informationen können in weiteren Schritten zur Vermeidung von Kollisionen mit anderen Gegenständen genutzt werden, wenn beispielsweise die Position des Prüfobjektes verändert wird.

Eine vorteilhafte Weiterbildung der Erfindung sieht vor, dass die Bestimmung der Gefährdungsradien für vorgegebene Höhen entlang der Rotationsachse separat erfolgt und die Tabelle mit den relevanten Parametern die Höhenabhängigkeit wiedergibt. Zusätzlich zu der im vorangehenden Absatz ausgeführten Beziehung zwischen Radius des Prüfobjekts und dem jeweils zugeordneten Rotationswinkel kommt hier zu den relevanten Parametern noch die Höhe, in der die vorgenannte Beziehung herrscht. Damit kann der Gefährdungsbereich für verschiedene Höhen unterschiedlich bestimmt werden.

Eine weitere vorteilhafte Weiterbildung der Erfindung sieht vor, dass die Schritte zwischen den Rotationswinkeln kontinuierlich oder äquidistant zwischen 1° und 60°, bevorzugt 30°, betragen. Je kleiner die Rotationswinkel werden, desto exakter ist die Bestimmung des Gefährdungsbereichs; allerdings nimmt die Datenmenge und benötigte Zeit zu, so dass ein Kompromiss gefunden werden muss.

Eine weitere vorteilhafte Weiterbildung der Erfindung sieht vor, dass als Strahlungsquelle die Röntgenröhre und als Strahlungsdetektor der Röntgendetektor des Röntgenprüfsystems verwendet werden und die bereits im Röntgenprüfsystem enthaltene CT-Feldkamprekonstruktion (FDK-Rekonstruktion) zur Bestimmung des jeweiligen Gefährdungsradius verwendet wird. Dadurch ist kein zusätzliches Kamerasystem im optischen Bereich nötig, da das Röntgenprüfsystem sowieso vorhanden ist.

Ein Beispiel zum besseren Verständnis der Erfindung sieht vor, dass als Strahlungsdetektor eine im sichtbaren Bereich empfindliche Kamera verwendet wird und die Strahlungsquelle ein gleichmäßig mit von der Kamera registrierbarem Licht ausgeleuchteter Hintergrund ist, wobei sich das Prüfobjekt zwischen Kamera und Hintergrund befindet und der Schatten des Prüfobjekts im Gegenlicht von der Kamera aufgenommen wird. Damit kann mit einfachen Mitteln ein hervorragendes Ergebnis erzielt werden.

Ein weiteres Beispiel sieht vor, dass die Hauptachse des Kamerablickfeldes der Kamera senkrecht auf die Rotationsachse des Prüfobjekts steht. Dadurch vereinfacht sich die zugrunde liegende Geometrie, was zu einer einfachen Berechnung der relevanten Parameter führt.

Eine weitere vorteilhafte Weiterbildung der Erfindung sieht vor, dass die Tabelle mit den relevanten Parametern optisch dargestellt wird und/oder sie der Steuerung der Rotationsbewegung des Röntgenprüfsystems mitgeteilt wird, die daraufhin diesen Bereich bei der Röntgenprüfung des Prüfobjekts nicht anfährt. Bei der optischen Darstellung bekommt der Nutzer eine visuelle Vorstellung des Prüfobjekts und kann das Röntgenprüfsystem sicherer in die Prüfpositionen bewegen. Für den zweiten Fall wird eine vollautomatische Steuerung der Röntgenprüfung des Prüfobjekts durch das Röntgenprüfsystem vorgenommen, wobei sichergestellt ist, dass keine Kollision des Röntgenprüfsystems mit dem Prüfobjekt erfolgt.

Weitere Vorteile und Einzelheiten der Erfindung werden anhand der in den Figuren dargestellten Ausführungsbeispiele erläutert. Es zeigen:

Figur 1　　ein Schattenbild eines Prüfobjekts,

Figur 2　　den Hintergrund der Figur 1 ohne Prüfobjekt,

Figur 3　　das Differenzbild der Figuren 1 und 2,

Figur 4　　die Binarisierung der Figur 3,

Figur 5　　einen schematischen Aufbau zur Durchführung eines erfindungsgemäßen Verfahrens,

Figur 6　　eine Skizze zur Veranschaulichung der für die Berechnung relevanten geometrischen Beziehungen,

Figur 7　　ein Ergebnis nach Durchführung einer verfeinerten erfindungsgemäßen Ausführungsform,

Figur 8　　eine Skizze zur Veranschaulichung der Gegebenheiten bei einer verfeinerten erfindungsgemäßen Ausführungsform,

Figur 9　　eine Skizze zur Veranschaulichung der relevanten geometrischen Beziehungen bei einem verfeinerten erfindungsgemäßen Verfahren,

Figur 10　　eine Darstellung bei einer FDK-Rekonstruktion,

Figur 11　　eine Darstellung von gewichteten Pixeln bei nur einem Randstrahl und

Figur 12　　eine Darstellung von gewichteten Pixeln bei mehreren Randstrahlen.

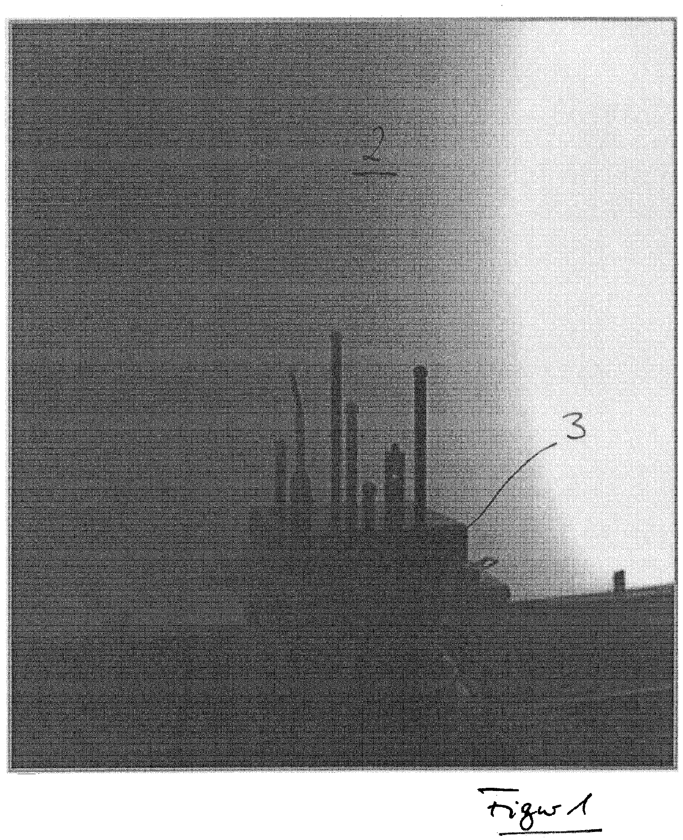

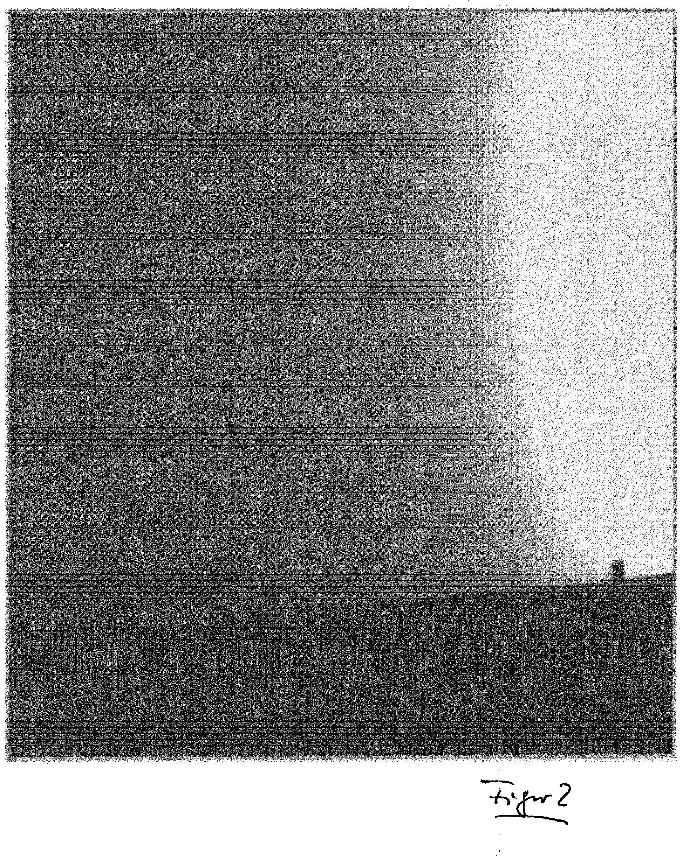

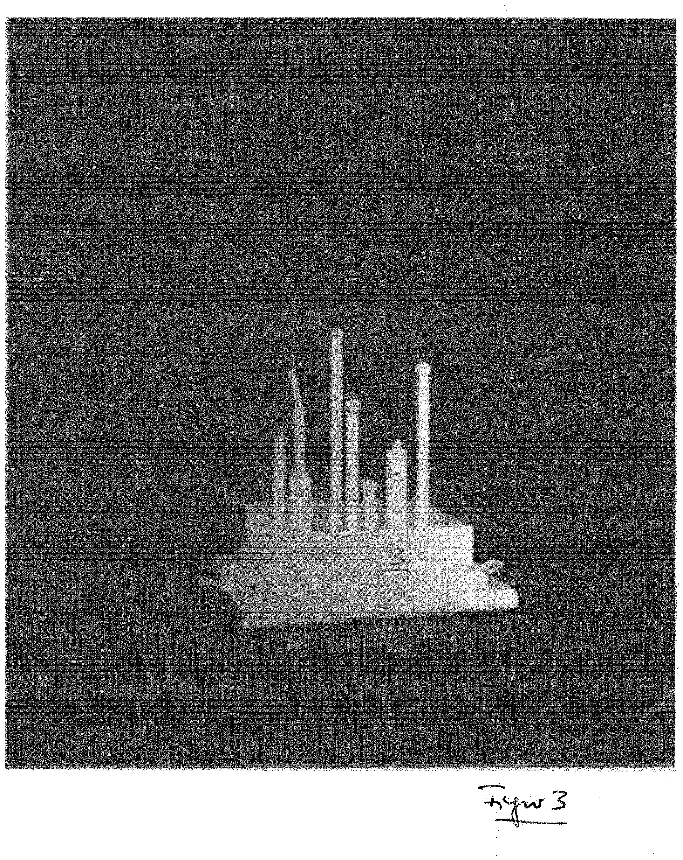

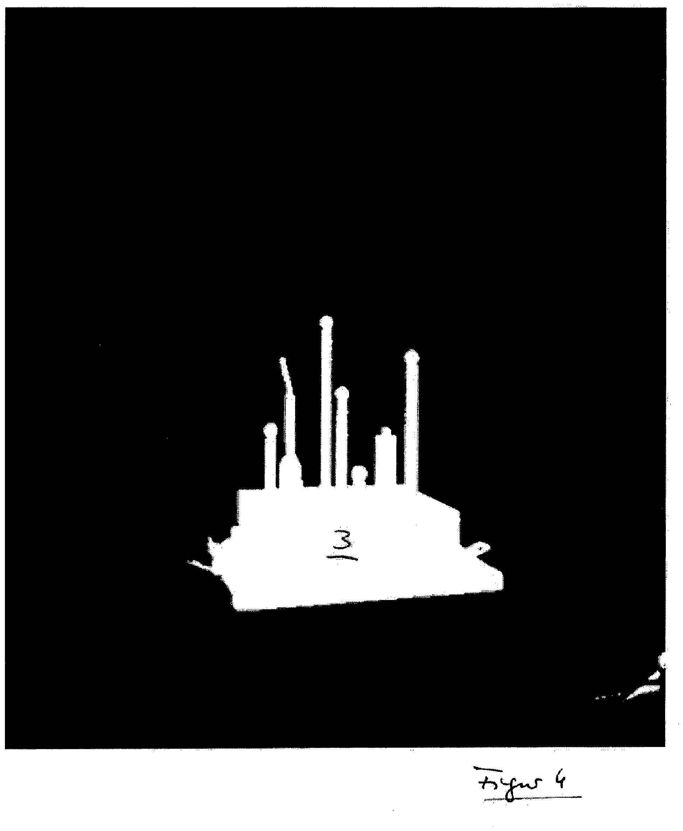

Im Folgenden wird ein Verfahren beschrieben, das auf Kamerabildern des Prüfobjektes basiert. Um die Ausmaße eines Prüfobjektes 3 zu bestimmen, werden Kamerabilder von verschiedenen Blickwinkeln verwendet. Es ergeben sich dafür verschiedene Möglichkeiten. Zum einen kann die Drehung des Prüfobjektes 3 um eine fixierte Rotationsachse 5 durchgeführt werden. Zum anderen kann die Kamera 1 um das Prüfobjekt 3 herum rotiert werden. Im Folgenden wird von der ersten Variante ausgegangen. Da nur die Objektkonturen von Interesse sind, werden mit Hilfe von Gegenlicht Schattenbilder aufgenommen. Dazu bildet der Hintergrund 2 die einzige, möglichst homogene Lichtquelle. Das Prüfobjekt 3 wird, bezüglich der Kamera 1, von hinten beleuchtet, wodurch sich die Objektkonturen als Schattenbegrenzung vom Hintergrund 2 abheben. Ein Beispiel eines Schattenbildes ist in Figur 1 dargestellt. Anhand einer zusätzlichen Hintergrundaufnahme (Figur 2) ohne Prüfobjekt 3 und Teller kann eine Differenz gebildet werden (Figur 3), aus der das Prüfobjekt 3 in weiteren Schritten einfacher zu extrahieren ist. Figur 4 zeigt eine Binarisierung des Differenzbildes der Figur 3.

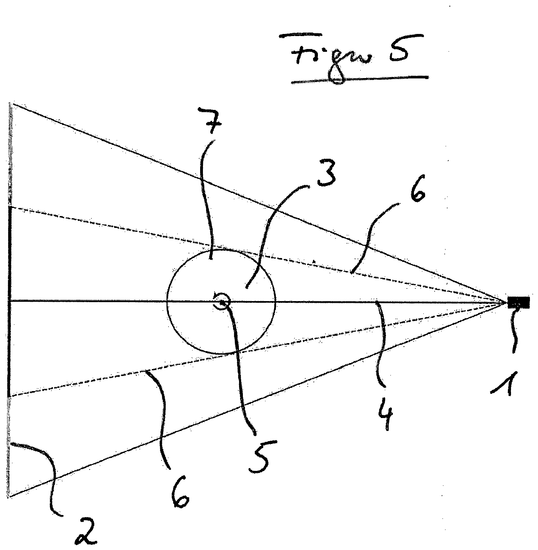

Ein schematischer Testaufbau ist in Figur 5 dargestellt. Auf der linken Seite befindet sich der homogen beleuchtete Hintergrund 2. Die Kamera 1 ist auf der rechten Seite positioniert mit Blickrichtung zum beleuchteten Hintergrund 2. Das Prüfobjekt 3 wird in den Bereich dazwischen positioniert, wodurch es sich als Schatten vom Hintergrund 2 abhebt. Um ein Schattenbild mit der Kamera 1 aufnehmen zu können, muss der Hintergrund 2 des Prüfobjektes 3 als einzige Lichtquelle existieren.

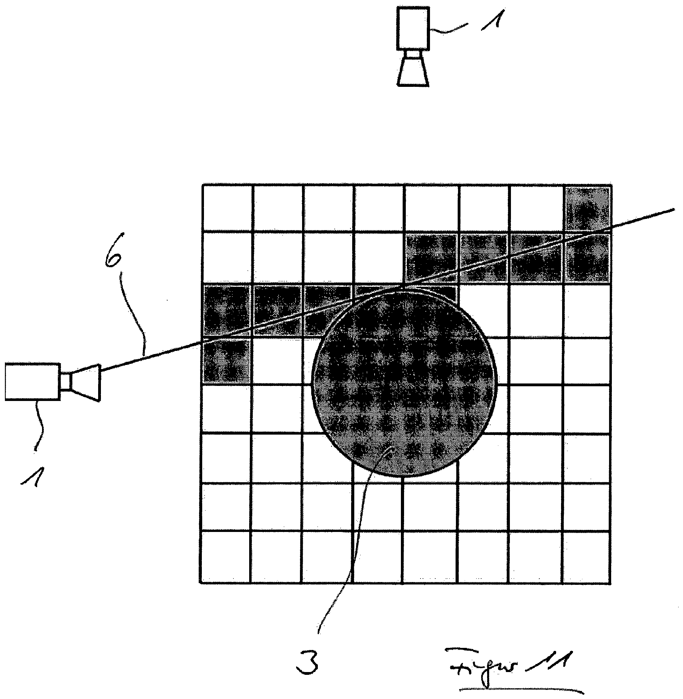

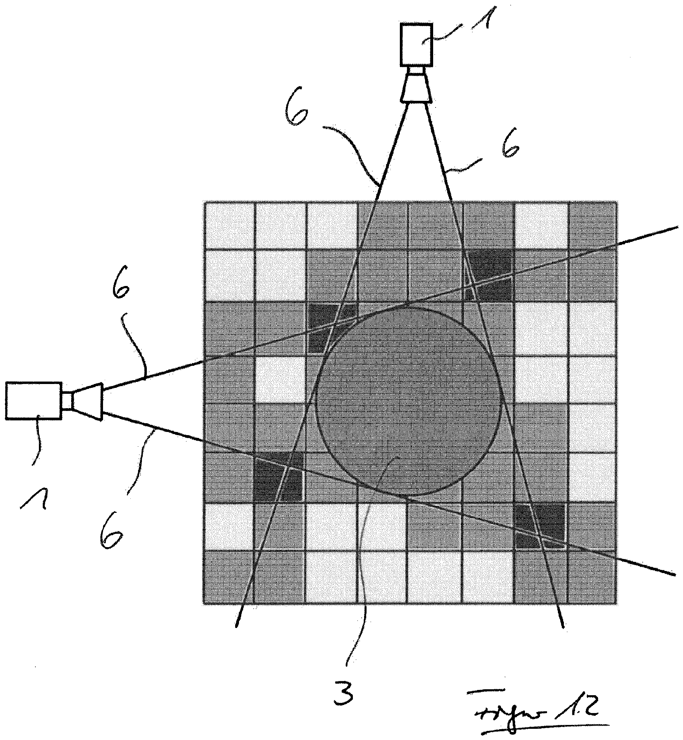

Für die folgenden Ansätze wird zunächst von einer besonderen Ausrichtung von der Kamera 1 zur Rotationsachse 5 ausgegangen. Die Hauptachse 4 des Kamerablickfeldes trifft in einem rechten Winkel auf die Rotationsachse 5. Dadurch vereinfachen sich die vorliegenden Geometrieeigenschaften, jedoch wird die vertikale Position der Kamera 1 durch diese Bedingung eingeschränkt. Es ist ebenfalls möglich, eine Volumenerkennung mit nahezu beliebiger Kameraposition durchzuführen. Darauf wird unten mit Bezug auf die Figuren 11 und 12 näher eingegangen.

Gesucht ist nun ein Algorithmus zur Volumenerkennung mit folgenden Ein- und Ausgaben:

- Eingabe: Schattenbilder mit unterschiedlichen Blickwinkeln auf das Prüfobjekt 3.
- Ausgabe: Verschiedene Komplexitätsstufen sind denkbar:

　　1. Höhe h mit entsprechend maximalem Objektradius $r_{max}$ in Relation zur Rotationsachse 5,
　　2. Höhe h, Rotationswinkel $\gamma$ mit entsprechendem Objektradius r in Relation zur Rotationsachse 5,
　　3. dreidimensionales Volumen, das zur Darstellung für den Benutzer verwendet werden kann.

Mit dem Objektradius $r_{max}$ ist der Radius gemeint, den das Prüfobjekt 3 ausgehend von der Rotationsachse 5 bei einer Rotation maximal einnimmt. Dieser Parameter ist je nach Höhe h variabel. Weiterhin ist die Angabe des Rotationswinkels $\gamma$ als Variable denkbar, für die zusammen mit der Höhe h ein entsprechender Objektradius r existiert. Im Idealfall sollte nach der Volumenerkennung außerdem eine dreidimensionale Objektdarstellung am PC des Benutzers verfügbar sein, um einen visuellen Eindruck der Volumenerkennung zu gewährleisten.

Für alle Komplexitätsstufen erfolgt zunächst eine Binarisierung des Prüfobjektes 3, wie sie exemplarisch in Figur 4 dargestellt ist. An allen Objektpositionen befindet sich in diesen Bildern ein Wert ungleich Null.

Sofern ausreichend Informationen über die Geometrie vorliegen, ist eine Aussage über den maximalen Radius $r_{max}$ bezüglich der Höhe h mit wenig Rechenaufwand anhand einer direkten Auswertung der Binärbilder möglich. Figur 5 zeigt eine schematische Darstellung eines entsprechenden Versuchsaufbaus mit einem Betrachtungswinkel von oben. Ziel ist es zunächst, den dunklen Kreis zu finden, der durch $r_{max}$ definiert wird und den Gefährdungsbereich 7 für einen Kollisionsschutz darstellt. Der Gefährdungsbereich 7 korreliert mit dem Gefährdungsradius 8, der bei den erfindungsgemäßen Verfahren bestimmt wird. Dieser Kreis beinhaltet das gesamte Prüfobjekt 3 für alle Rotationsbewegungen um die Rotationsachse 5. Externe Gegenstände dürften sich nicht innerhalb dieses Bereiches befinden, da sich für mindestens eine (nicht notwendigerweise alle) Winkelpositionen eine Kollision mit dem Prüfobjekt 3 ergeben würde. Der Parameter FOD repräsentiert den Abstand zwischen Kamera 1 und der Rotationsachse 5. Der Abstand DOD gibt die Distanz zwischen Prüfobjekt und einer theoretischen Bildebene hinter dem Prüfobjekt 3 an. Der Parameter s repräsentiert die Größe des Objektschattens auf dem Kamerabild. Das temporäre Maß r' kann verwendet werden, um die eigentlich gesuchte Größe $r_{max}$ zu bestimmen.

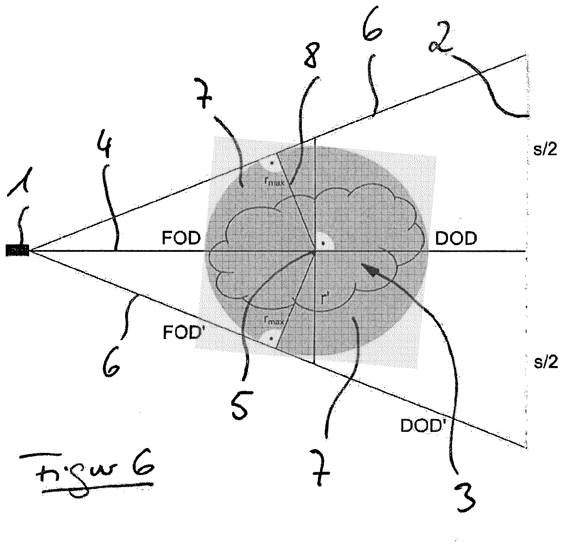

Durch die bekannte Geometrie kann davon ausgegangen werden, dass der Abstand zwischen Prüfobjekt 3 und Kamera 1, in Figur 6 mit FOD bezeichnet, bekannt ist. Dafür kann das Prüfobjekt 3 im Vorfeld an eine vordefinierte Position innerhalb des Kamerablickfeldes positioniert worden sein. Da die Bildebene auf der anderen Seite des Prüfobjektes 3 theoretisch angenommen wird, kann die Entfernung DOD zwischen Prüfobjekt 3 und dieser Ebene beliebig gewählt werden. Der Einfachheit halber wird FOD = DOD gewählt.

Zur Bestimmung der Schattengröße s ist zwar bereits die Anzahl von Pixeln innerhalb des Binärbildes gegeben, jedoch ist noch die Pixelgröße für die theoretische Bildebene zu bestimmen. Nach dem Strahlensatz folgt

$$d = \frac{c}{f} \cdot 2 \cdot \text{FOD},$$

mit den kameraspezifischen Parametern c der Sensorpixelgröße und f der Brennweite. Durch die Annahme, dass die Bildebene oder auch der virtuelle Detektor bei der Kameraaufnahme genau so weit entfernt ist, wie der Weg von Kamera 1 zur Rotationsachse 5, ergibt sich der Faktor 2·FOD. Aus der Pixelgröße und der Gesamtanzahl an Pixeln ergibt sich dann die reale Schattengröße s, beziehungsweise s/2.

Es ist weiterhin möglich, die Strecke r' mit dem Strahlensatz zu bestimmen

$$\frac{r'}{\frac{s}{2}} = \frac{\text{FOD}}{\text{FOD} + \text{DOD}} \Leftrightarrow r' = \frac{s}{4}.$$

Der gesuchte Radius $r_{max}$ ergibt sich dann aus der Höhenbestimmung des rechtwinkligen Dreiecks, das durch FOD und r' aufgespannt wird

$$r_{max} = \frac{\text{FOD} \cdot r'}{\sqrt{\text{FOD}^2 + \left(\frac{s}{2}\right)^2}}.$$

Die einzelnen Schritte des ersten Ansatzes lauten somit zusammengefasst:

1. Alle Binärbilder zeilenweise durchlaufen und die Objektkanten ermitteln.
2. Für jede Höhe den größten Abstand $r_{max}$ des Objektrandes zur Rotationsachse 5 bestimmen.
3. Ausgabe der Wertepaare h und $r_{max}$.
4. Dem Benutzer kann ein Zylinder in Form der jeweiligen Radien $r_{max}$ als visuelle Rückmeldung angezeigt werden.

Die genannten Wertepaare h und $r_{max}$ sind ein Beispiel für die oben genannten relevanten Parameter in der genannten Tabelle.

Es ist denkbar, nicht nur eine Kante zu betrachten. Beispielsweise kann nur die Hälfte aller Projektionen verwendet werden, wenn die rechte und linke Kante entsprechend betrachtet werden. Es ist ebenfalls möglich, beide Kanten zu betrachten und das entsprechende Maximum zu verwenden, um mögliche Fehlerquellen, wie beispielsweise Beleuchtung, Reflexion und Rauschen zu minimieren.

Als zweiter Ansatz ist es möglich, die zuvor vorgestellte direkte Auswertung der Binärbilder für jede Höhe nicht auf den maximalen Radius $r_{max}$ zu beschränken. Wird für jedes Projektionsbild unter variierendem Rotationswinkel $\gamma$ die Objektkante bestimmt, kann der zuvor kreisförmige Gefährdungsbereich 7 reduziert werden.

Für diesen Ansatz wird der Rotationswinkel $\gamma$

zwischen r' und dem jeweiligen r von Interesse. Dieser Offset des Rotationswinkels γ für den bestimmten Radius wird als ω bezeichnet und lässt sich durch

$$\sin\omega = \frac{r}{r'} \Leftrightarrow \omega = \arcsin\frac{r}{r'}$$

bestimmen.

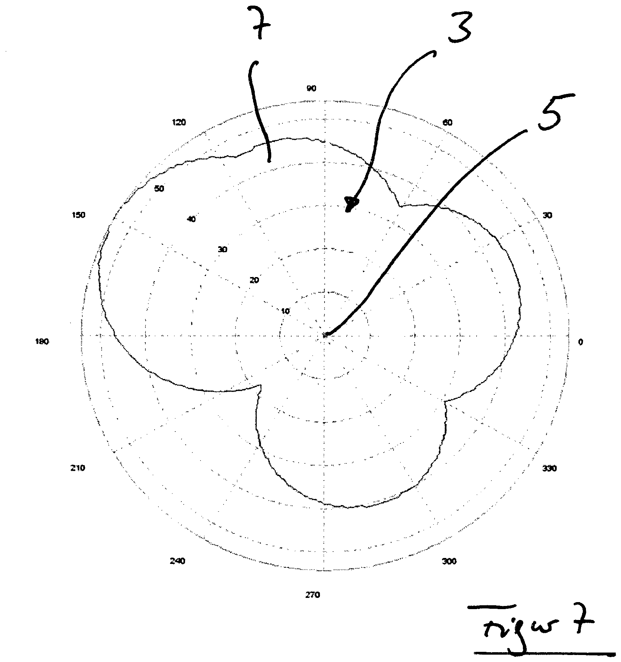

Ein Beispiel für diesen erweiterten Ansatz, welcher einen Radius r für jedes Rotationswinkel-Höhe-Paar (γ, h) liefert, ist in Figur 7 zu sehen. Zur Orientierung zeigt das linke Bild einen Querschnitt durch ein berechnetes Volumen des gleichen Prüfobjektes 3 in der gleichen Höhe h. Außerdem werden die entsprechenden Radien, ausgehend von der Rotationsachse 5 angegeben. Dadurch wird deutlich, dass die Ergebnisse des erweiterten Ansatzes mit dem digitalen Volumen übereinstimmen. Der kreisförmige Gefährdungsbereich 7 aus dem ersten Ansatz konnte deutlich reduziert werden.

Das Ergebnis dieses Ansatzes ist somit eine genauere Angabe des Gefährdungsbereiches 7, wobei ein Kollisionsschutz jedoch nicht mehr für beliebige Rotationswinkel γ gewährleistet ist. Der Gefährdungsbereich 7, wie er in Figur 7 dargestellt ist, gilt entweder nur für die initiale Winkelposition oder muss entsprechend mit rotiert werden.

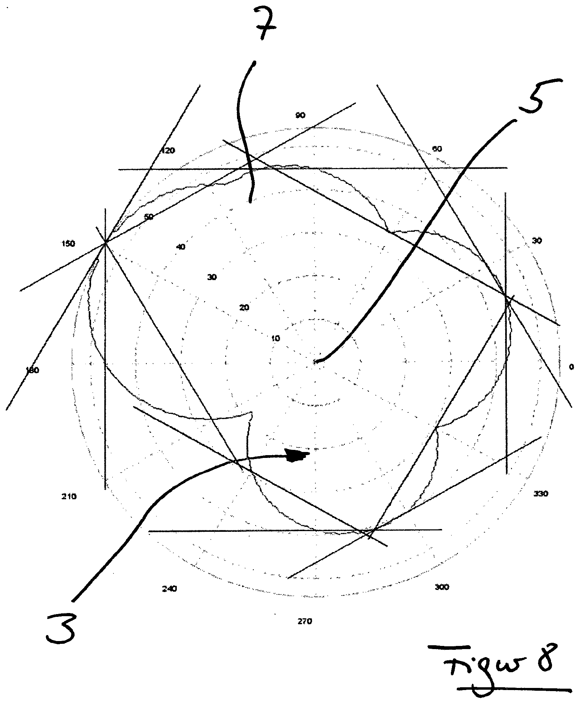

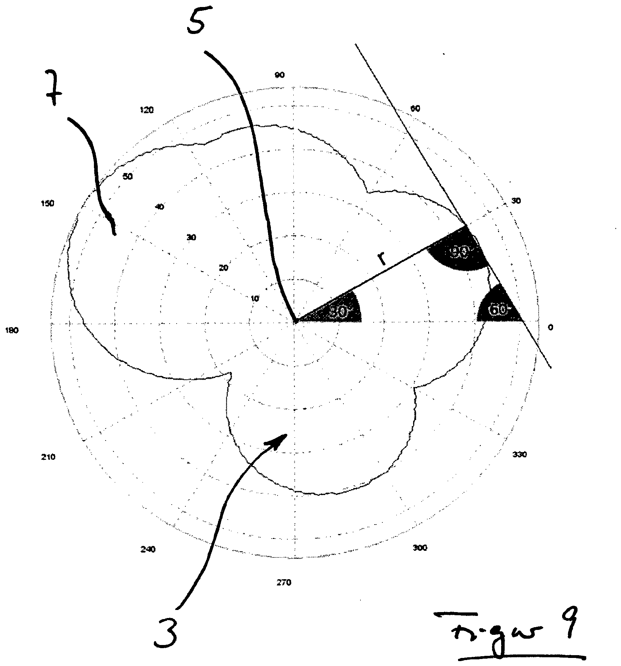

Eine Volumendarstellung als visuelle Rückmeldung für den Benutzer ist außerdem auf Basis von Figur 7 in Form einer vereinfachten Volumenrekonstruktion möglich. Diese wird schematisch in den Figuren 8 und 9 dargestellt. Ausgehend von den Radien pro Rotationswinkel γ und Höhe h können beliebig viele Rotationswinkel γ für die exaktere Rekonstruktion verwendet werden (in Figuren 8 und 9 werden die Rotationswinkel γ mit einem Abstand von 30° betrachtet). Zu betrachten sind dann die Orthogonalen, die gerade durch den Radius des momentanen Rotationswinkels γ verlaufen.

Durch die Ermittlung der Schnittpunkte aller Geraden kann dann eine genauere Abschätzung der konvexen Hülle des Prüfobjektes 3 gemacht werden (siehe Figur 8), wobei das Ergebnis vom zweiten Ansatz als visuelle Hülle bezeichnet werden kann. Die Schnittpunkte können anhand der Informationen, die in Figur 9 als Beispiel für den Rotationswinkel γ = 30° angegeben sind, bestimmt werden. Die Abschätzung der Objekthülle wird mit zunehmender Anzahl an betrachteten Rotationswinkeln γ genauer.

Zusammenfassend ergeben sich für diesen zweiten Ansatz die folgenden Schritte:

1. Alle Binärbilder zeilenweise durchlaufen und die Objektkanten ermitteln.
2. Für jeden Rotationswinkel γ und jede Höhe h den Radius r bestimmen.
3. Ausgabe von r pro Paar (γ, h).
4. Dem Benutzer können die Radien r für (γ, h) als dreidimensionales Volumen dargestellt werden (siehe Figur 7 für eine exemplarische horizontale Schicht).

Die Werte für die Radien r für (γ, h) stellen ein anderes Beispiel für die oben genannten relevanten Parameter in der genannten Tabelle. Diese sind feiner als die oben bei dem ersten Ansatz genannten relevanten Parameter, da sie nicht über 360° denselben Radius angeben, sondern diesen in Abhängigkeit vom Rotationswinkel wiedergeben (der erste Ansatz hingegen gibt eine vergröberte Umhüllende wieder).

Der dritte Ansatz nutzt bereits existierende CT-Feldkamprekonstruktionen aus (im Folgenden durch FDK abgekürzt). Die Schattenbilder werden dafür als Projektionsbilder einer Kegelstrahlaufnahme mit Röntgenstrahlung interpretiert. Dabei entsprechen dann alle Werte gleich Null keiner Abschwächung der Röntgenstrahlen. Es befanden sich auf diesem Weg somit keinerlei schwächende Objekte, insbesondere kein Teil des Prüfobjektes 3. Aller Werte ungleich Null entsprechen einer Abschwächung der Strahlung durch das Prüfobjekt 3 im Strahlengang.

Die einzelnen Schritte des dritten Ansatzes lauten zusammengefasst:

1. Einen gegebenen FDK-Algorithmus anwenden, der ein dreidimensionales Volumen liefert.
2. Eine Segmentierung der Objektbereiche vom Hintergrund wird durchgeführt, was ein binäres Volumen liefert.
3. Aus dem binären Volumen kann entweder $r_{max}$ pro h oder r für jedes Paar (γ, h) bestimmt werden.
4. Das unsegmentierte Ergebnisvolumen kann dem Benutzer als visuelle Rückmeldung dargestellt werden, in der er für weitere Schritte genaueste Navigationsbefehle durchführen kann.

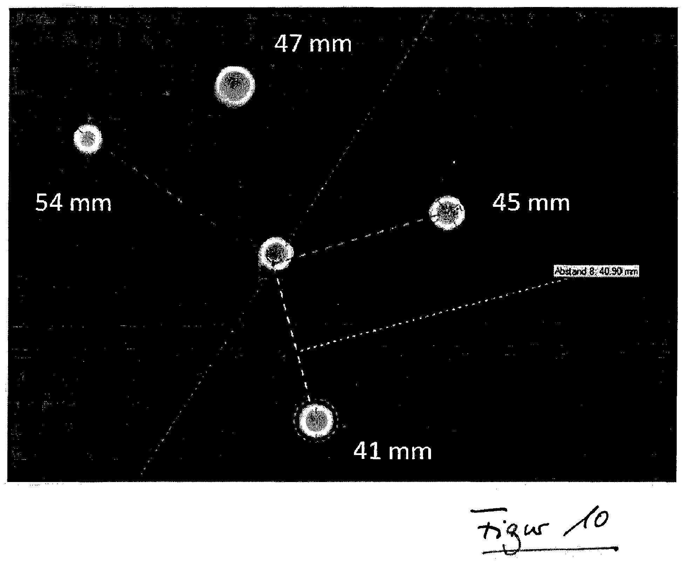

Ein Beispiel für diesen Ansatz ist Figur 10 zu entnehmen. Die Abbildung zeigt das Ergebnis solch einer FDK-Rekonstruktion für das Prüfobjekt 3, das in den Figuren 1 bis 4 zu sehen war. Im Gegensatz zu den vorherigen Verfahren ist hier eine genaue Aussage über Objektteile innerhalb der konvexen Hülle möglich. Hier ist jedoch zu beachten, dass diese Information ausschließlich für gleichbleibenden Rotationswinkel γ möglich ist, beziehungsweise der Gefährdungsbereich 7 auch hier entsprechend zu rotieren ist.

Alternativ zu den zuvor vorgestellten Verfahren, ist die Verwendung einer beliebigen Kameraposition ebenfalls möglich. Die Position der Kamera 1 wird anhand einer entsprechenden Kalibrierung ermittelt. Es werden dann für eine Volumenerkennung die Strahlenverläufe der Kamera 1 unter dem jeweiligen Blickwinkel nachverfolgt und das Auftreffen auf eine Objektkante geprüft. Ein Beispiel dazu ist in den Figuren 11 und 12 im Zweidimensionalen dargestellt, wobei eine Erweiterung auf die dritte Dimension entsprechend möglich ist. Der Bereich, in dem sich das Prüfobjekt befindet, wird in Pixel unterteilt. Entlang der Geraden werden die Pixel traversiert und gewichtet. In Figur 11 sind einmal gewichtete Pixel aus einer Blickrichtung in halbdunkel dargestellt. Falls mehrere Geraden durch dasselbe Pixel verlaufen, erhält dieses Pixel ein höheres Gewicht, wie anhand der dunklen Pixel in Figur 12 zu sehen ist. Die Bereiche mit hohen Gewichten bilden dann eine konvexe Hülle des Prüfobjektes 3.

Anstatt der beschriebenen Höhergewichtung, bei der Hintergrundartefakte im Volumen entstehen, kann auch ein Ausschlussverfahren für jeden Blickwinkel durchgeführt werden. Das zu rekonstruierende Volumen wird für jedes Projektionsbild unter dem entsprechenden Winkel betrachtet. Alle Voxel, die sich außerhalb der dargestellten Objektkontur befinden, werden aus der Betrachtung entfernt, da sie nicht zum Prüfobjekt 3 gehören können. Die oben ausgeführten ersten beiden Ansätze können mit dieser verallgemeinerten Kameraposition ebenfalls erweitert werden.

Zusammenfassend, bieten alle Ansätze die Möglichkeit, eine adäquate Volumenerkennung und einen darauf basierenden Kollisionsschutz umzusetzen. Die Verfahren erfordern jedoch mit zunehmender Genauigkeit und Flexibilität ebenfalls einen zunehmenden Rechenaufwand. Denkbar ist daher ein gestaffelter Ansatz, der mit einer einfachen, zylindrischen Volumenerkennung beginnt und dann, je nach Wunsch des Benutzers, weitere Schritte für eine präzisere Aussage und Volumendarstellung vornimmt.

Bezogen auf den speziellen Bereich der Computertomographie ergibt sich außerdem noch eine weitere Möglichkeit, die Präzision zu erhöhen. Alle vorgestellten Verfahren sind in ihrer Auflösungsfähigkeit auf die Qualität der verwendeten Kamera beschränkt. Alternativ kann für einen genügend kleinen Bereich ebenfalls das eigentliche Röntgenbild mit den gleichen Verfahren für eine Volumenerkennung verwendet werden. In der Regel weisen Röntgendetektoren wesentlich höhere Auflösungen auf, als standardmäßig verwendete Kameras 1.

Bezugszeichenliste

1    Kamera
2    beleuchteter Hintergrund
3    Prüfobjekt
4    Hauptachse
5    Rotationsachse
6    Randstrahl
7    Gefährdungsbereich
8    Gefährdungsradius
h    Höhe
$\gamma$    Rotationswinkel

**Patentansprüche**

1. Verfahren zur Steuerung einer Röntgenprüfung eines Prüfobjekts durch ein Röntgenprüfsystem, wobei das Röntgenprüfsystem umfasst:

   - eine Strahlungsquelle,
   - einen zu der Strahlungsquelle in einem vorgebenen Abstand angeordneten Strahlungsdetektor,
   - eine Steuereinrichtung zur Steuerung einer Rotationsbewegung des Röntgenprüfsystems,

   das Verfahren umfassend:

   - Durchführen einer Bestimmung des Gefährdungsbereichs (7) für einen Kollisionsschutz zwischen dem Prüfobjekt (3) und dem Röntgenprüfsystem, die gegeneinander um eine im Prüfobjekt (3) verlaufende Rotationsachse (5) rotieren, wobei mittels der Strahlungsquelle und dem Strahlungsdetektor diejenigen Randstrahlen (6) bestimmt werden, die unter einem vorgegebenen Rotationswinkel ($\gamma$) zwischen Prüfobjekt (3) und Strahlungsquelle-Strahlungsdetektor-Anordnung die Außenkontur des Prüfobjekts (3) unter diesem Rotationswinkel ($\gamma$) streifen, die Bestimmung des Gefährdungsbereichs (7) umfassend:

      Bestimmung des Gefährdungsradius (8) der Außenkontur zur Rotationsachse (5) des Prüfobjekts (3) für den vorgegebenen Rotationswinkel ($\gamma$),
      Wiederholung der Bestimmung der Randstrahlen (6) für vorgegebene Rotationswinkel ($\gamma$), die über 360° verteilt sind und Bestimmung des jeweiligen Gefährdungsradius (8), Erstellung einer Tabelle mit den relevanten Parametern der für die vorgegebenen Rotationswinkel ($\gamma$) erhaltenen Gefährdungsradien (8) des Randes des Prüfobjekts (3),
      Mitteilen der Tabelle an eine Steuerung der Rotationsbewegung des Röntgenprüfsystems;

   - vollautomatisiertes Steuern der Röntgenprüfung derart, dass die Steuerung diesen Bereich bei der Röntgenprüfung des Prüfobjekts (3) nicht anfährt und sicherstellt, dass beim Verändern der Position des Prüfobjekts keine Kollision des Röntgenprüfsystems mit dem Prüfobjekt erfolgt.

2. Verfahren nach Patentanspruch 1, wobei die Bestimmung der Gefährdungsradien (8) für vorgebene Höhen (h) entlang der Rotationsachse (5) separat erfolgt und die Tabelle mit den relevanten Parametern die Höhenabhängigkeit wiedergibt.

3. Verfahren nach einem der vorstehenden Patentansprüche, wobei die Schritte zwischen den Rotationswinkel ($\gamma$) kontinuierlich oder äquidistant zwischen 1° und 60°, bevorzugt 30°, betragen.

4. Verfahren nach einem der vorstehenden Patentansprüche, wobei die bereits im Röntgenprüfsystem enthaltene CT-Feldkamprekonstruktion zur Bestimmung des jeweiligen Gefährdungsradius (8) verwendet wird.

5. Verfahren nach einem der vorstehenden Patentansprüche, wobei die Tabelle mit den relevanten Parametern optisch dargestellt wird.

6. Röntgenprüfsystem zur Röntgenprüfung eines Prüfobjekts, wobei das Röntgenprüfsystem umfasst:

    - eine Strahlungsquelle,
    - einen zu der Strahlungsquelle in einem vorgegebenen Abstand angeordneten Strahlungsdetektor,
    - eine Steuereinrichtung zur Steuerung einer Rotationsbewegung des Röntgenprüfsystems,

wobei das Röntgenprüfsystem dazu eingerichtet ist, eine Bestimmung eines Gefährdungsbereichs (7) für einen Kollisionsschutz zwischen dem Prüfobjekt (3) und dem Röntgenprüfsystem durchzuführen, die gegeneinander um eine im Prüfobjekt (3) verlaufende Rotationsachse (5) rotieren,

    wobei mittels der Strahlungsquelle und dem Strahlungsdetektor diejenigen Randstrahlen (6) bestimmt werden, die unter einem vorgegebenen Rotationswinkel ($\gamma$) zwischen Prüfobjekt (3) und Strahlungsquelle-Strahlungsdetektor-Anordnung die Außenkontur des Prüfobjekts (3) unter diesem Rotationswinkel ($\gamma$) streifen, die Bestimmung des Gefährdungsbereichs (7) umfassend:
    Bestimmung des Gefährdungsradius (8) der Außenkontur zur Rotationsachse (5) des Prüfobjekts (3) für den vorgegebenen Rotationswinkel ($\gamma$),
    Wiederholung der Bestimmung der Randstrahlen (6) für vorgegebene Rotationswinkel ($\gamma$), die über 360° verteilt sind und Bestimmung des jeweiligen Gefährdungsradius (8),
    Erstellung einer Tabelle mit den relevanten Parametern der für die vorgegebenen Rotationswinkel ($\gamma$) erhaltenen Gefährdungsradien (8) des Randes des Prüfobjekts (3),
    Mitteilen der Tabelle an die Steuereinrichtung zur Steuerung der Rotationsbewegung des Röntgenprüfsystems;

und wobei das Röntegenprüfsystem ferner dazu eingerichtet ist, die vollautomatisierte Steuerung der Röntgenprüfung derart vorzunehmen, dass die Steuerung diesen Bereich bei der Röntgenprüfung des Prüfobjekts (3) nicht anfährt und sicherstellt, dass beim Verändern der Position des Prüfobjekts keine Kollision des Röntgenprüfsystems mit dem Prüfobjekt erfolgt.

## Claims

1. Method for controlling an X-ray inspection of a test object through an X-ray inspection system, wherein the X-ray inspection system comprises:

    - a radiation source,
    - a radiation detector arranged at a predetermined distance from the radiation source,
    - a control device for controlling a rotational movement of the X-ray inspection system,

the method comprising:

    - carrying out a determination of the danger zone (7) for collision prevention between the test object (3) and the X-ray inspection system, which rotate counter to one other about an axis of rotation (5) running through the test object (3), wherein, by means of the radiation source and the radiation detector, those marginal rays (6) are determined which, at a predetermined angle of rotation ($\gamma$) between test object (3) and radiation source-radiation detector arrangement, graze the outer contour of the test object (3) at this angle of rotation ($\gamma$), the determination of the danger zone (7) comprising:

    determining the danger radius (8) of the outer contour in relation to the axis of rotation (5) of the test object (3) for the predetermined angle of rotation ($\gamma$),
    repeating the determination of the marginal rays (6) for predetermined angles of rotation ($\gamma$), which are distributed over 360°, and determining the respective danger radius (8),
    creating a table with the relevant parameters of the danger radii (8) of the edge of the test object (3) obtained for the predetermined angles of rotation ($\gamma$),
    communicating the table to a control system of the rotational movement of the X-ray inspection system;

    - fully automated controlling of the X-ray inspection in such a way that, during the X-ray inspection of the test object (3), the control system does not move towards this area and ensures that no collision of the X-ray inspection system with the test object occurs when changing the position of the test object.

2. Method according to claim 1, wherein the determination of the danger radii (8) for predetermined heights (h) along the axis of rotation (5) is carried out separately and the table with the relevant parameters provides the height dependency.

3. Method according to one of the preceding claims, wherein the steps between the angles of rotation ($\gamma$) are continuously or equidistantly between 1° and 60°, preferably 30°.

4. Method according to one of the preceding claims, wherein the CT Feldkamp reconstruction already contained in the X-ray inspection system is used for the determination of the respective danger radius (8).

5. Method according to one of the preceding claims, wherein the table with the relevant parameters is represented visually.

6. X-ray inspection system for the X-ray inspection of a test object, wherein the X-ray inspection system comprises:

   - a radiation source,
   - a radiation detector arranged at a predetermined distance from the radiation source,
   - a control device for controlling a rotational movement of the X-ray inspection system,

wherein the X-ray inspection system is set up to carry out a determination of a danger zone (7) for collision prevention between the test object (3) and the X-ray inspection system, which rotate counter to one other about an axis of rotation (5) running through the test object (3),
wherein, by means of the radiation source and the radiation detector, those marginal rays (6) are determined which, at a predetermined angle of rotation ($\gamma$) between test object (3) and radiation source-radiation detector arrangement, graze the outer contour of the test object (3) at this angle of rotation ($\gamma$), the determination of the danger zone (7) comprising:

   determining the danger radius (8) of the outer contour in relation to the axis of rotation (5) of the test object (3) for the predetermined angle of rotation ($\gamma$),
   repeating the determination of the marginal rays (6) for predetermined angles of rotation ($\gamma$), which are distributed over 360°, and determining the respective danger radius (8),

creating a table with the relevant parameters of the danger radii (8) of the edge of the test object (3) obtained for the predetermined angles of rotation ($\gamma$),
communicating the table to the control device for controlling the rotational movement of the X-ray inspection system;

and wherein the X-ray inspection system is further set up to perform the fully automated controlling of the X-ray inspection in such a way that, during the X-ray inspection of the test object (3), the control system does not move towards this area and ensures that no collision of the X-ray inspection system with the test object occurs when changing the position of the test object.

**Revendications**

1. Procédé pour commander un contrôle par rayons d'un objet à contrôler par le biais d'un système de contrôle à rayons, le système de contrôle à rayons comprenant :

   - une source de rayonnement ;
   - un détecteur de rayonnement disposé à une distance prédéfinie de la source de rayonnement ;
   - un dispositif de commande pour commander un mouvement de rotation du système de contrôle à rayons ;

le procédé comprenant :

   - la mise en oeuvre d'une détermination de la zone de danger (7) pour une protection antichoc entre l'objet à contrôler (3) et le système de contrôle à rayons tournant en sens opposé autour d'un axe de rotation (5) s'étendant dans l'objet à contrôler (3) ;
   les rayons de bordure (6) étant déterminés à l'aide de la source de rayonnement et du détecteur de rayonnement, ces rayons effleurant, selon un angle de rotation ($\gamma$) prédéterminé entre l'objet à contrôler (3) et l'agencement de détection de rayonnement de source de rayonnement, le contour extérieur de l'objet à contrôler (3) selon cet angle de rotation ($\gamma$), la détermination de la zone de danger (7) comprenant :

      la détermination du rayon dangereux (8) du contour extérieur par rapport à l'axe de rotation (5) de l'objet à contrôler (3) pour l'angle de rotation ($\gamma$) prédéterminé ;
      la répétition de la détermination des rayons de bordure (6) pour les angles de rotation (y) prédéterminés répartis sur 360° et la détermination du rayon dangereux (8) respectif ;

l'élaboration d'un tableau avec les paramètres pertinents des rayons dangereux (8) de la bordure de l'objet à contrôler (3) obtenus pour les angles de rotation (γ) prédéterminés ;

la transmission du tableau à un élément de commande du mouvement de rotation du système de contrôle à rayons ;

- la commande entièrement automatisée du contrôle par rayons de telle sorte que l'élément de commande ne pénètre pas cette zone lors du contrôle par rayons de l'objet à contrôler (3) et s'assure qu'en cas de changement de position de l'objet à contrôler, aucun choc du système de contrôle à rayons ne se produise avec l'objet.

2. Procédé selon la revendication 1, la détermination des rayons dangereux (8) étant réalisée séparément pour des hauteurs (h) prédéterminées le long de l'axe de rotation (5) et le tableau restituant cette dépendance par rapport à la hauteur avec les paramètres pertinents.

3. Procédé selon l'une quelconque des revendications précédentes, les pas entre les angles de rotation (γ) étant continus ou à équidistance entre 1° et 60°, de façon préférée 30°.

4. Procédé selon l'une quelconque des revendications précédentes, la reconstruction de champ par scanographie déjà contenue dans le système de contrôle à rayons étant utilisée pour déterminer le rayon dangereux (8) respectif.

5. Procédé selon l'une quelconque des revendications précédentes, le tableau avec les paramètres pertinents étant représenté visuellement.

6. Système de contrôle à rayons pour le contrôle par rayons d'un objet à contrôler, le système de contrôle à rayons comprenant :

   - une source de rayonnement ;
   - un détecteur de rayonnement disposé à une distance prédéfinie de la source de rayonnement ;
   - un dispositif de commande pour commander un mouvement de rotation du système de contrôle à rayons ;

   le système de contrôle à rayons étant conçu pour mettre en oeuvre une détermination d'une zone de danger (7) pour une protection antichoc entre l'objet à contrôler (3) et le système de contrôle à rayons tournant en sens opposé autour d'un axe de rotation (5) s'étendant dans l'objet à contrôler (3) ;

les rayons de bordure (6) étant déterminés à l'aide de la source de rayonnement et du détecteur de rayonnement, ces rayons effleurant, selon un angle de rotation (γ) prédéterminé entre l'objet à contrôler (3) et l'agencement de détection de rayonnement de source de rayonnement, le contour extérieur de l'objet à contrôler (3) selon cet angle de rotation (γ), la détermination de la zone de danger (7) comprenant :

   la détermination du rayon dangereux (8) du contour extérieur par rapport à l'axe de rotation (5) de l'objet à contrôler (3) pour l'angle de rotation (γ) prédéterminé ;

   la répétition de la détermination des rayons de bordure (6) pour les angles de rotation (y) prédéterminés répartis sur 360° et la détermination du rayon dangereux (8) respectif ;

   l'élaboration d'un tableau avec les paramètres pertinents des rayons dangereux (8) de la bordure de l'objet à contrôler (3) obtenus pour les angles de rotation (γ) prédéterminés ;

   la transmission du tableau à un élément de commande du mouvement de rotation du système de contrôle à rayons ;

   - et le système de contrôle à rayons étant en outre conçu pour exécuter la commande entièrement automatisée du contrôle par rayons de telle sorte que l'élément de commande ne pénètre pas cette zone lors du contrôle par rayons de l'objet à contrôler (3) et s'assure qu'en cas de changement de position de l'objet à contrôler, aucun choc du système de contrôle à rayons ne se produise avec l'objet.

Figur 1

Figur 2

Figur 3

Figur 4

Figur 5

Figur 6

Figur 7

16

Figur 8

Figur 9

Figur 10

Figur 11

Fig. 1.2

**IN DER BESCHREIBUNG AUFGEFÜHRTE DOKUMENTE**

**In der Beschreibung aufgeführte Patentdokumente**

- EP 1970010 A1

- JP 2012184936 A

**In der Beschreibung aufgeführte Nicht-Patentliteratur**

- 3D cone-beam tomography for nondestructive testing. **PER-ERIK DANIELSSON.** PROCEEDINGS OF IAPR WORKSHOP ON MACHINE VISION APPLICATIONS. UNIV. TOKYO, 1994, 1-8